# EUROPEAN PATENT SPECIFICATION

(11) **EP 3 210 848 B1**
(45) Date of publication and mention of the grant of the patent: **05.12.2018**
(21) Application number: 17157108.6
(22) Date of filing: 21.02.2017
(51) Int. Cl.: B62D 1/183, B62D 1/184, B62D 1/187

(54) **SUPPORT FRAME FOR A STEERING COLUMN FOR TRACTORS AND ASSOCIATED SYSTEMS THEREOF**
UNTERSTÜTZGESTELL FÜR EINE LENKSÄULE FÜR TRAKTOREN UND DAMIT VERBUNDENE SYSTEME
CADRE DE SUPPORT POUR UNE COLONNE DE DIRECTION POUR TRACTEURS ET SYSTÈMES ASSOCIÉS À CELUI-CI

(30) Priority: 25.02.2016 IT UB20161042
(43) Date of publication of application: 30.08.2017
(73) Proprietor: C.O.B.O. S.p.A., 25024 Leno (BS) (IT)
(72) Inventor: ZUCCOLI, GIANFRANCO, 42124 REGGIO EMILIA (IT)
(74) Representative: Tarabbia, Luigi

(56) References cited:
- EP-A1- 2 377 741
- CN-A- 1 146 962
- US-A- 4 430 905
- US-A1- 2012 146 316

## Description

The present invention relates to a support frame for at least one rod of a steering column for a tractor, which allows to have the possibility to position the steering column and/or orient the various parts of the same column based on the user's needs and on the structural configuration of the tractor, and by means of which the manufacturing time and cost for the support frame are significantly reduced compared to currently known frames.

The present invention also relates to a casing for at least one rod of a steering column, adapted to be used in a support frame of a steering column for a tractor, which allows to simplify the manufacturing process of the support frame itself compared to casings which are currently known and used in such context.

The present invention also relates to an adjustment or control system suitable to be associated to a support frame for at least one rod of a steering column for a tractor, which allows to reduce the compactness of the control system itself and improve its convenience of use compared to the control systems currently known and used in this context, and which allows to obtain a dual integrated control, allowing in turn a dual adjustment with the same control system.

The present invention also relates to a transmission system of the rotary motion of a fixed-hub or fixed-crown wheel fixed to a drive shaft connected to a steering column for a tractor, which has a reduced mechanical complexity compared to the existing transmission systems currently used for this purpose, and allowing to optimize the transmission ratio.

Document US4430905, on which the preamble of claim 1 is based, shows an adjustable steering column for a motor vehicle of the type comprising two shaft sections connected by an articulated coupling and wherein the improvement consists in providing two casings for respective sections, assembled by flanges, at least one of which is inclined with respect to the normal to the longitudinal axis of the casing.

Commonly, the steering system of tractors comprises a steering wheel, a drive shaft which is connected to the steering column, the steering column itself, and a main transmission system between the steering column and the axis of the wheels.

The steering system normally includes another transmission system, which can be defined as intermediate transmission system, operatively interposed between the steering wheel, or more precisely between the rotating part of the wheel itself and such drive shaft.

The steering column, which is operatively interposed between the drive shaft and the main transmission system, usually comprises in turn a first rod of the same steering column and a second rod of the same steering column, and a universal joint which transmits the rotation of a rod on itself to another rod. By convention and by way of example, the first rod can be the one located between the drive shaft and the universal joint, while the second rod can be the one located between the universal joint and the main transmission system.

According to this scheme, the drive shaft is then connected, possibly in telescopic manner, to the first rod of the steering column.

The kinematic chain of transmission, starting from the rotating part of the steering wheel and going towards the main transmission system, is therefore the following: steering wheel, intermediate transmission system, drive shaft, first rod of the steering column, universal joint, second rod of the steering column, main transmission system.

Such a steering system is associated to a support frame for the protection and handling of the various parts of the steering column between them and with respect to the structure of the tractor.

Currently, the support framework comprises a first support frame for the first rod of the steering column and a second support frame for the second rod of the steering column.

The drive shaft, which is connected to the first rod of the steering column, usually fits at least partially within the first support frame.

The first support frame in turn comprises a first cylindrical tubular casing, which extends along an extension axis and has two openings in two respective opposite ends of the first casing itself. Such a first casing is suitable to contain the first rod of the steering column and to keep it inserted in the first casing itself so that the extension axis of this first rod remains aligned with the extension axis of the first casing itself.

The second support frame in turn comprises a second cylindrical tubular casing, which extends along an extension axis and has two openings in two respective opposite ends of the second casing itself. Such a second casing is suitable to contain the second rod of the steering column and to keep it inserted in the second casing itself so that the extension axis of this second rod remains aligned with the extension axis of the second casing itself.

The drive shaft, which is connected to the first rod of the steering column, usually fits at least partially within the first casing, so that an extension axis of this drive shaft is aligned with that of the first casing.

Currently, the support frame comprises a first hinge constraining system between the first support frame and the second support frame, which allows the first support frame to rotate with respect to the second support frame.

This first hinge constraining system allows in particular the first casing, and its extension axis, to rotate with respect to the second casing, and thus with respect to the extension axis of said second casing. This first hinge constraining system then allows the first rod of the steering column, when contained in the first casing, to rotate relative to the second rod of the steering column, when the latter is contained in the second casing, so as to vary the mutual inclination of the two rods.

This first hinge constraining system between the first and the second support frame can be realized by means of a connection module fixed on one side to one of the supporting frames and the other hinged to the other support frame.

The connection module is commonly secured to a first sector of the second casing by welding and hinged to the first casing, and is suitable to contain the universal joint between the first rod and second rod of the steering column.

This first hinge constraining system is associated to a first locking system which allows to fix the inclination between the first support frame and the second support frame.

This first locking system makes it possible, in particular, to fix the inclination of the first casing with respect to the second casing by locking the mutual rotation of the first casing and the second casing around the first hinge constraining system. Such first locking system can assume an unlocked condition, wherein the mutual rotation of such first casing and second casing around the first hinge constraining system is allowed, and a locked condition, wherein the mutual rotation of such first casing and second casing around the first hinge constraining system is prevented.

This first locking system can be operatively interposed between the first casing and a connection module, in which case it comprises a coupling structure between the first casing and the connection module itself. Alternatively, this first locking system can be operatively interposed between the first and the second casing, in which case it comprises a first spring, which for example can be a gas spring.

This first locking system is in turn associated to a first control system. Such first control system is configured to make sure that the first locking system assumes its locked condition, locking the rotation between first and second casing around the first hinge constraining system, and to impart to this first locking system its unlocked condition, allowing the rotation between the first casing and second casing around the first hinge constraining system.

If the first locking system comprises such first spring, the first control system is configured to impart to the first locking system its locked condition, by locking this first spring, and to impart to such first locking system its unlocked condition, through the release of said first spring.

The support frame usually comprises a base module which is at least partially connected to the second support frame and fixed to the structure of the tractor. This base module can be then fixed to the second support frame or only at least partially bound to the second support frame.

If the base module is fixed to the second support frame, the same base module is commonly attached or attached by welding to a second casing of the second sector, opposite to the first sector of the second casing where the connection module is fixed.

Instead, if the base module is just at least partially constrained to the second support frame, the framework comprises a second hinge constraining system. This second hinge constraining system is interposed between the base module and the second casing to allow the rotation of the second support frame with respect to the base module itself and therefore also with respect to the structure of the tractor. This second hinge constraining system is positioned roughly on the same second sector of the casing, wherein, in the other case, the welding was present between the base module and the second casing.

This second hinge constraining system allows in particular the second casing and its extension axis to rotate with respect to the base module, and then to the structure of the tractor.

This second hinge constraining system then allows the second rod of the steering column, when contained in the second casing, to rotate with respect to the structure of the tractor.

This second hinge constraining system is associated to a second locking system which allows to fix the inclination between the second support frame and the structure of the tractor.

This second locking system makes it possible in particular to fix the inclination of the second casing with respect to the structure of the tractor by locking the rotation of the second casing around the second hinge constraining system. Such second locking system can assume an unlocked condition, wherein the rotation of the second casing around the second hinge constraining system is allowed, and a locked condition, wherein the rotation of the second casing around the second hinge constraining system is prevented.

This second locking system is operatively interposed between the second casing and the base module, and may comprise a second spring, which for example can be a gas spring.

This second locking system is in turn associated to a second control system. Such second control system is configured to impart to such second locking system its locked condition, locking the rotation of the second casing around the second hinge constraining system, and to impart to this second locking system its unlocked condition, allowing the rotation of the second casing around the second hinge constraining system.

If the second locking system comprises such second spring, the second control system is configured to impart to such second locking system its locked condition, by locking such second spring, and to impart to such second locking system its unlocked condition, through the release of said second spring.

Usually, between the drive shaft and the first support frame, there is a sleeve constraining system, allowing the drive shaft to translate, along its extension axis, with respect to the first support frame. Such sleeve constraining system allows in particular the drive shaft, along its extension axis, to translate along the extension axis of the first casing and relative to the first casing itself.

The translational motion of the drive shaft with respect to the first casing allows to fix the axial positioning of the steering wheel.

This sleeve constraining system is associated to a third locking system which allows to fix the positioning of the drive shaft relative to the first support frame.

The third locking system allows in particular to fix the position of the drive shaft along the extension axis of the first casing, locking the translational motion of the drive shaft along such sleeve constraining system. Such third locking system can assume an unlocked condition, wherein the translational motion of the drive shaft along this sleeve constraining system, therefore relative to the first casing is allowed, and a locked condition, wherein the translational motion of the drive shaft along such sleeve constraining system, therefore relative to the first casing is prevented.

Such third locking system may comprise friction locking means. Such friction locking means may comprise at least two half shells of the same first casing that are able to remain tight around said drive shaft.

Such third locking system is in turn associated with a third control system. This third control system is configured to impart to such third locking system its locked condition, locking the drive shaft translation along the first casing, and to impart to such third locking system its unlocked condition, allowing the translational motion of the drive shaft along the first casing.

If the third locking system comprises such half shells of the second casing, the third control system is configured to impart to such third locking system its locked condition, locking the grip of such half shells around the drive shaft, and to impart to such third locking system its unlocked condition, unlocking the grip of these half shells around the drive shaft.

The steering wheel can be advantageously a fixed-hub or fixed-crown wheel. This type of steering wheel commonly comprises a fixed portion, on which the interface tools allowing the convenient management of various functions of the tractor by the user are positioned, and a rotating part.

Currently, the intermediate transmission system, which transmits the rotary motion of the rotatable part to the drive shaft, comprises a crown, a first gear, an intermediate element, a second gear and a transmission shaft.

Such crown transmits the rotary movement of the rotating part of the steering wheel to an intermediate element, by means of a first gear rigidly coupled to the crown itself. This intermediate element, by means of a second gear located internally to the first and integral with the intermediate element, transmits said rotary motion to the drive shaft. In this way it is possible to stagger the positioning of the intermediate transmission element with respect to the drive shaft, so that the axis of the intermediate transmission element appears offset with respect to the rotation axis of the rotating part of the steering wheel, to make room for the necessary electronic connections to interface instruments placed on the fixed part of the steering wheel.

Going back to the architecture of the support framework, the connection module interposed between the first support frame and the second support frame is currently fixed to the second support frame by welding of the connection module on a same first casing of the second sector, as previously said.

In addition, in the case described above in which the base module is also fixed relative to the second support frame, even the same base module is fixed to the second casing by welding of the base module itself on a second sector of the second casing, which it is preferably located on the opposite side of this first sector.

In order to be able to have a plurality of support frames, each of which is ready to be mounted on a respective tractor and suitable for a steering column rod of different length, the connection module and the base module associated with each support frame, that can be regarded as forming part of the same frame, they must already be welded to the respective casing, since welding operations require a certain time. Therefore, there is a need to have many pairs of modules, each comprising a base module and a connection module for each frame comprising a casing of different length.

In addition, the welding between the single module and the casing does not allow to separate the casing from the single module once that they are welded together, unless of course resulting in unwanted damage.

The need to weld the casing modules also imposes constraints on their form, as the welding operation imposes limits to the extension of the coupling area between the single module and the casing. Given that each of the modules must be structurally configured not only to remain attached to the casing, but also to cooperate with at least another component, the modules currently have a high constructional complexity, especially in terms of number of components.

In addition, the bond between the single module and the casing by welding can easily exhibit defects going to the detriment of the tightness of the bond itself.

A first object of the present invention is to devise a support frame for at least one rod of a steering column for a tractor, which is modular so as to increase the versatility of use of its components with respect to currently known frames.

A second object of the present invention is to devise a support frame for at least one rod of a steering column for a tractor, which allows to assemble together the components of the frame more rapidly compared to currently known frames.

A third object of the present invention is to devise a support frame for at least one rod of a steering column for a tractor, which is modular so as to allow to use the same specific piece suitable to carry out the base module or connection module function for casings suitable to contain steering column rods of different length, and thus for casings of different length.

A fourth object of the present invention is to devise a support frame for at least one rod of a steering column for a tractor, which allows to realize stronger and safer constraints between the components of the frame itself compared to currently known frames.

These first, second, third and fourth object are obtained by means of a support frame for at least one rod of a steering column for a tractor that has one or more of the following features.

The support frame comprises a casing suitable to contain said at least one rod.

The support frame comprises a base module.

The support frame comprises a connection module.

The connection module is configured to be fixed to a first sector of the casing. The base module is configured to be fixed to a second sector of the casing.

This first sector preferably comprises a first end of the casing, and this second sector preferably comprises a second end of the casing opposite to such first end.

The connection module is configured to be attached around the first sector of the casing by means of respective friction locking means.

The connection module is suitable to remain tight around said first sector of the casing, through the respective friction locking means, when fixed to the casing itself.

The base module is configured to be attached around the second sector of the casing by means of respective friction locking means.

The base module is suitable to remain tight around said second sector of the casing, through the respective friction locking means, when fixed to the casing itself.

Such friction locking means which allow to fix the connection module to the casing comprise at least two half shells of the same connection module suitable to define therebetween an opening for the insertion of the first sector of the casing in such a connection module.

This opening can be adapted to make sure that the casing completely passes through the connection module itself.

The half shells of the connection module are suitable to remain tightly around the first sector of the casing to lock the connection module around said first sector of the casing. In this way, the casing remains fixed in the connection module virtually by interference.

The half shells of the connection module are preferably suitable to tighten around said first sector of the casing to lock the connection module to the first sector of the casing, by approaching the half shells themselves shells and narrowing the opening defined by the same. Such half shells of the connection module are preferably suitable to widen when they are around such first sector of the casing to remove or separate the connection module from the casing, by moving away from each other the same half shells and widening said opening defined by the same.

Preferably, such locking means which allow to fix the base module to the casing comprise at least two half shells of the same base module, suitable to define between them an opening for the insertion of the second sector of the casing in such base module.

This opening can be adapted to make sure that the casing completely passes through the base module itself.

The half shells of the base module are suitable to remain tightly around the second sector to lock the base module around said second sector of the casing. In this way, the casing remains fixed in the base module virtually by interference.

The half shells of the base module are preferably suitable to tighten around the second sector of the casing to lock the base module around the second sector of the casing, by approaching the half shells themselves and narrowing the opening defined by the same. Such half shells of the base module are preferably suitable to widen when they are around such second sector of the casing to remove or separate the base module from the casing, by moving away from each other the same half shells and widening said opening defined by the same.

The half shells of at least one of these modules preferably form a single piece.

Preferably, said at least one of such modules comprises a prismatic block. Preferably, each of these modules comprises a prismatic block, which in turn includes the two respective half shells of the module itself.

Preferably, such friction locking means are clamp locking means.

A possible method for producing such a support frame having one or more of the preceding features comprises the following steps:
preparing said casing, said base module and said connection module, said casing being arranged so that it has an appropriate length to contain said at least one rod,
attaching said modules respectively to a first sector and a second sector of said casing by means of friction locking means.

Preferably, the preparation of said casing is obtained starting from an extruded material, by cutting a piece of appropriate length from the same extruded material.

Preferably, this method is carried out to obtain a plurality of casings of different respective lengths and adapted to the respective steering column rods of different lengths.

Going back to consider the existing support framework of the steering column, and in particular with reference to the case in which, between the second support frame and the base module, there is the second hinge constraining system, the same second hinge constraining system, as mentioned earlier, is associated to a second locking system.

This second locking system is usually bound in a first constraint point to the second casing and in a second constraint point to the base module.

If we consider the second constraint point as fixed, the angular position of the second casing around the second hinge constraining system depends on the positioning of such first constraint point along the extension axis of the second casing.

Currently, this first constraint point, defined between the second locking system and the second casing, is realized by means of a connecting structure configured to be connected on one side to the same second locking system and on the other side to the outer surface of the second casing.

The same second casing is currently configured so that the connecting structure can be fixed alternatively at various levels along the extension axis of the second casing itself. By varying the placement of such connection structure, the position of the first constraint point which, as mentioned above, is defined between the second locking system and the second casing, varies as well, and the rotation of the second casing around the second hinge constraining system can be therefore locked in a different angular position by means of the second locking system.

In view of the cylindrical tubular shape of the second casing, in the current supporting frameworks, such connection structure must be produced separately and has a certain constructive complexity to be able to interface, as mentioned above, both with the second casing and with the second locking system.

The fifth object of the present invention is to develop a casing for at least one rod of a steering column for a tractor, suitable to be used in a support frame of the column itself, which allows to place this at least one rod of the column at different inclinations relative to the structure of the tractor, and which presents a structural configuration such as to reduce the manufacturing time of the frame itself.

This fifth object is achieved by means of a casing for at least one rod of a steering column for a tractor, wherein said casing defines a box-like body. Such a casing is adapted to be part of a support frame for said rod.

Said supporting frame comprises said casing and a base module, and a hinge constraining system between the base module and the casing.

Such a support frame includes a locking system configured to lock and unlock the rotation of said casing around said hinge constraining system and with respect to said base module.

When such a locking system is in a locked condition, the rotation of the casing around said hinge constraining system and with respect to the base module is prevented.

When such a locking system is in an unlocked condition, the rotation of the casing around said hinge constraining system and with respect to the base module is allowed.

Such casing preferably comprises at least two half shells attachable to each other so as to define said box-like body.

Such box-like body extends along its extension axis.

These half-shells are preferably mutually distinct, but may alternatively form a single piece.

This casing is configured to be constrained to such a locking system, in at least one constraint point.

Such casing preferably comprises, on its boundary surface, at least a connection flange projecting from such boundary surface and configured to define said constraint point.

This boundary surface is to be considered as a surface that delimits the internal volume of the box-shaped body and which is located around the extension axis of the same box-like body.

Preferably, the connection flange is configured to constrain said locking system to the casing through the interposition of an intermediate plate between the connection flange itself and the locking system.

Such intermediate plate is configured to be attached on one side to the connection flange and to be hinged on the other side to the locking system. To this end, the intermediate plate preferably comprises at least a first hole for fixing the plate to the connection flange, and at least one second hole to define the hinge between the intermediate plate and locking system.

The connection flange is preferably configured to be constrained to the locking system alternately by means of the interposition of intermediate plates, which, once attached to the connection flange itself, have respective different dimensions along the extension axis of the box-like body defined by the casing, so as to vary, with the variation of such size, the inclination of the casing, and therefore also the rod of the steering column, when contained in the casing itself, with respect to the structure of the tractor, considering at least constant the characteristics of the locking system itself.

Returning again to the current support frames, the presence of different locking systems and an equal number of control systems is due to a certain constructional complexity of the whole frame. In particular, the proximity between the first locking system, intended to lock the rotation of the second support frame with respect to the first support frame, and the third locking system, intended to fix the positioning of the drive shaft with respect to the first support frame, each with its own control system, can create difficulties in the use of the same.

The sixth object of the present invention is to develop a control system for a supporting frame for at least one rod of a steering column for a tractor, which presents a better compactness with respect to adjustments that are available to the user, compared to control systems currently employed in such context.

The seventh object of the present invention is to develop a control system for a supporting frame for at least one rod of a steering column for a tractor, which allows to obtain a better convenience of use compared to control system currently employed in such context.

These sixth and seventh purpose are obtained by means of a control system suitable to be associated to a support frame for a steering column for a tractor, comprising a control lever which includes a button.

Such framework may comprise a drive shaft connected to the steering column and a sleeve constraining system between said drive shaft and said casing.

Such framework may comprise a casing for a rod of such column and an additional casing for a further rod of such column, and a hinge constraining system interposed between the same casing and additional casing.

The casing includes a locking system configured to lock and unlock the translational motion of the drive shaft along the sleeve constraining system and relative to the casing.

When such a locking system is in a locked condition, the translational motion of the drive shaft relative to the casing, along the sleeve constraint, is allowed.

When such a locking system is in an unlocked condition, the translational motion of the drive shaft relative to the casing, along the sleeve constraint, is allowed.

The casing comprises a further locking mechanism configured to lock and unlock the rotation of said casing around the hinge constraining system and relative to the additional casing.

When such additional locking system is in a locked condition, the casing rotation with respect to the further casing, around the hinge constraining system, is prevented.

When such additional locking system is in an unlocked condition, the first casing rotation relative to the further casing, around the hinge constraining system, is allowed.

Such a control system is configured to act both on the locking system and on the further locking system, possibly even simultaneously.

Such control system is configured to impart to such locking system such locking condition when the lever is in a first angular position, and to impart to such locking system said unlocking condition when such lever is in a second angular position.

Such lever is able to switch from said first angular position to said second angular position, and vice versa, by a rotation in one direction and respectively in the opposite direction.

Such control system is configured to impart to that further locking system a locking condition when the button is actuated, and to impart to that further locking system an unlocking condition when that button is released, or vice versa.

Currently, the intermediate transmission system between the rotating part of the steering wheel and the drive shaft has a certain mechanical complexity, and does not allow to optimize the transmission ratio of such intermediate transmission system.

A further object of the present invention is to develop a transmission system suitable for transmitting the rotation of a rotating part of a fixed-hub wheel to a drive shaft connected to a steering column for a tractor, which has a less complicated mechanical configuration compared to the transmission systems currently known and used for this purpose.

A further object of the present invention is to develop a transmission system suitable for transmitting the rotation of a rotating part of a fixed-hub wheel to a drive shaft connected to a steering column for a tractor, which enables to optimize with less constraints the transmission ratio of the transmission system itself, compared to the transmission systems currently known and used for this purpose.

These further objects are achieved by a transmission system suitable for transmitting the rotation of a rotary part of a steering wheel to a drive shaft suitable to be connected to a steering column for a tractor, wherein said transmission system comprises a transmission shaft adapted to be integral with such rotary part, and a windable transmission element, suitable to be interposed between said transmission shaft and said drive shaft.

This windable transmission element can comprise a belt or a chain.

The features of the present invention will be clarified by reading the following detailed description provided by way of illustration, and not limitation, of the claimed technical concepts.

The following detailed description refers to the accompanying drawings, wherein:
- Figure 1 shows a perspective view of a possible embodiment of a support frame according to the present invention;
- Figure 2 shows a lateral view a first part of this embodiment of such a support frame;
- Figure 3 shows a top view of such first part of such support frame;
- Figure 4 shows a lateral view of a second part of such support frame;
- Figure 5 shows a top view of such second part;
- Figure 6 shows a perspective view of a possible embodiment of a casing according to the present invention;
- Figure 7 shows a lateral view of said casing;
- Figure 8 shows two parts of this casing, separated from one another;
- Figure 9 shows a part of a second embodiment of a casing according to the present invention, in a first mode of use;
- Figure 10 shows this part of such second embodiment of a casing according to the present invention, in a second mode of use;
- Figure 11 shows a perspective view of a possible embodiment of a control system according to the present invention;
- Figure 12 shows a lateral view of such control system;
- Figure 13 shows a top view of such command system;
- Figure 14 shows a perspective view of a transmission system according to the present invention.

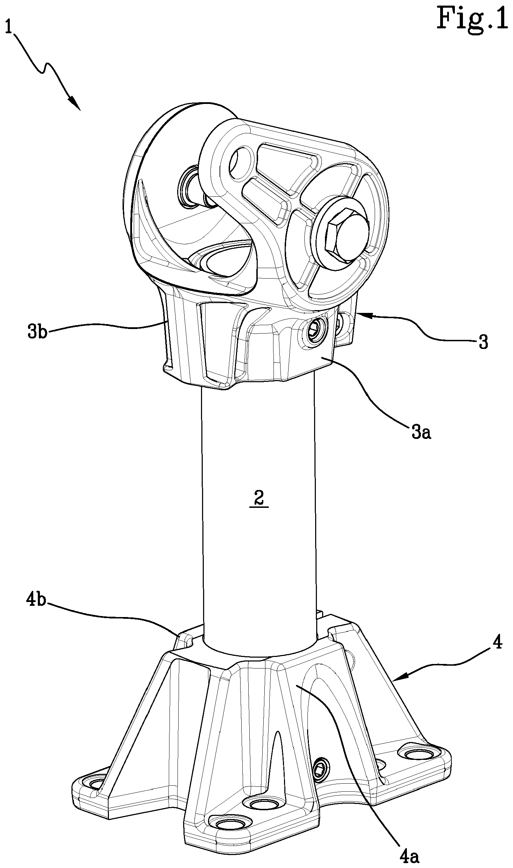

Figure 1 shows an example of a support frame 1 for at least one rod of a steering column for a tractor, according to the present invention.

The support frame 1 comprises a casing 2 suitable to contain said at least one rod.

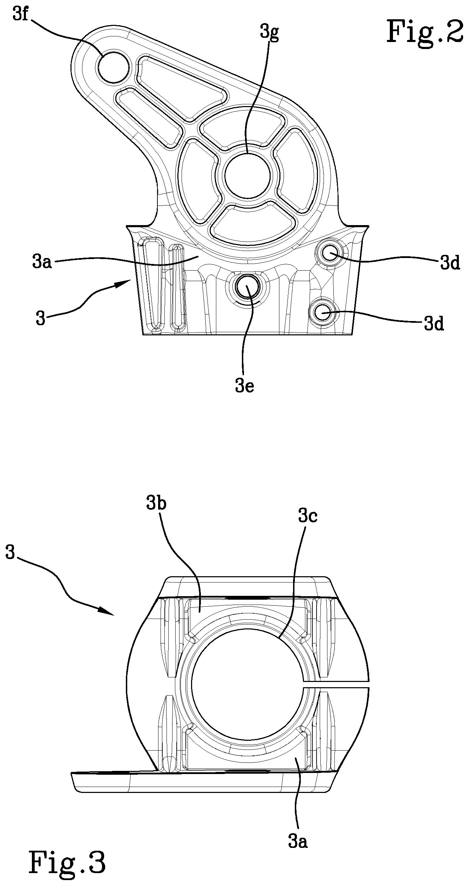

The support frame comprises a connection module 3, also referred to in Figures 2 and 3.

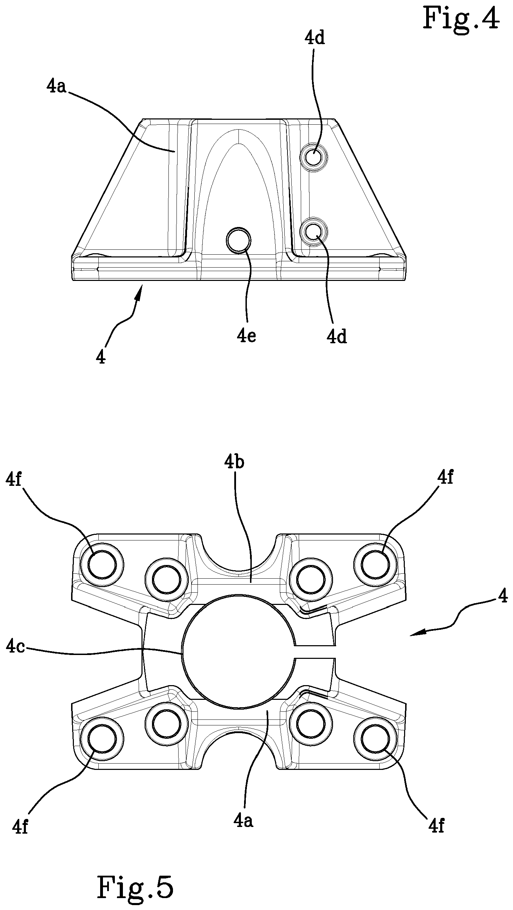

The support frame comprises a base module 4, also referred to in Figures 4 and 5.

The connection module 3 is configured to be fixed to a first sector of the casing 2. The base module 4 is configured to be fixed to a second sector of the casing 2.

In Figure 1, both the connection module 3 and the base module 4 are fixed to the casing 2.

This first sector preferably comprises a first end of the casing 2, and said second sector preferably comprises a second end of the casing 2 opposite to such first end.

At least one of such end has an open section of the casing 2.

The connection module 3 is configured to be attached around the first sector of the casing 2 by means of respective friction locking means. The connection module 3, through the respective friction locking means, is suitable to remain tight around said first sector of the casing, when fixed to the casing 2 itself, as shown in Figure 1.

The base module 4 is configured to be attached around the second sector of the casing 2 by means of respective friction locking means. The base module 4, by means of the respective friction locking means, is suitable to remain tightly around said second sector of the casing 2, when fixed to the casing 2 itself, as shown in Figure 1.

The friction locking means which allow to fix the connection module 3 to the casing 2 comprise at least two half shells of the connection module 3, shown in Figures 1, 4 and 5 with 3a and 3b. The half shells 3a and 3b of the connection module 3 are suitable to define between them an opening 3c for the insertion of the first sector of the casing 2 in such a connection module 3.

This opening 3c can be adapted to make sure that the casing 2 completely passes through the connection module 3 itself.

The half shells 3a and 3b of the connection module 3 are suitable to remain tight around the first sector of the casing 2 to lock the connection module 3 around said first sector of the casing.

The half shells 3a and 3b of the connection module 3 are preferably suitable to tighten around the first sector of the casing 2 to lock the connection module 3 around the first sector of the casing 2, by approaching the half shells 3a and 3b themselves shells and narrowing the opening 3c defined by the same. Such half shells 3a and 3b of the connection module 3 are suitable to widen when they are around such first sector of the casing 2 to remove or separate the connection module 3 from the casing 2, by moving away from each other the same half shells 3a and 3b and widening said opening 3c defined by the same.

In the example shown, as can be seen in Figure 2, to this end, the connection module 3 comprises holes 3d for the insertion of connection means suitable to bring together the two half shells 3a and 3b of the connection module 3, and to lock them to one another.

In addition, in the example shown, the connection module 3 advantageously also comprises at least one hole 3e for housing an anti-rotation screw adapted to fix the angular positioning of the casing 2 in the connection module 3, preferably by the coupling of said screw with interlocking means integral with the casing 2.

As can be seen in Figure 2, in the example shown, the connection module 3 preferably also comprises at least one hole 3f for connecting the connection module 3 to a coupling structure configured to lock the inclination of the casing 2 relative to another casing for another steering column rod.

The connection module 3, in the example shown, also comprises a further hole 3g to define the hinge constraint between the casing 2 and that other casing, by a pin that fits into said further hole 3g.

The casing 2 thus remains practically stuck by interference in the opening 3c of the connection module 3, in correspondence of the first sector of the casing 2 itself, in the assembly configuration of the frame 1 shown in Figure 1.

Such locking means which allow to fix the base module 4 to the casing comprise at least two half shells 4a and 4b of the same base module 4, suitable to define between them an opening 4c for the insertion of the second sector of the casing 2 in such base module 4.

Such opening 4c can be adapted to make sure that the casing 2 completely passes through the base module 4 itself.

The half shells 4a and 4b of the base module 4 are suitable to remain tightly around the second sector of the casing 2 to lock the base module 4 around said second sector of the casing 2.

The half shells 4a and 4b of the base module 4 are preferably suitable to tighten around such second sector of the casing 2 to lock the base module 4 to the second sector of the casing 2, by approaching the half shells 4a and 4b themselves shells and narrowing the opening 4c defined by the same. Such half shells 4a and 4b of the base module 4 are preferably suitable to widen when they are around such second sector of the casing 2 to remove or separate the base module 4 from the casing 2, by moving away from each other the same half shells 4a and 4b and widening said opening 4c defined by the same.

In the example shown, as can be seen in Figure 4, to this end, the base module 4 comprises holes 4d for the insertion of connection means suitable to bring together the two half shells 4a and 4b of the base module 4, and to lock them to one another.

In addition, in the example shown, the base module 4 advantageously also comprises at least one hole 4e for housing an anti-rotation screw adapted to fix the angular positioning of the casing 2 in the base module 4, preferably by the coupling of said screw with interlocking means integral with the casing 2.

As can be seen in Figure 5, in the shown example, the base module 4 preferably also comprises holes 4f for fixing of the same base module 4 to the structure of the tractor.

In addition, the connection module 4 advantageously also comprises a hole 4e for housing an anti-rotation and phasing screw.

The casing 2 thus remains practically stuck by interference in the opening 4c of the base module 4, in correspondence of the second sector of the casing 2 itself, in the assembly configuration of the frame 1 shown in Figure 1.

The half shells 3a and 3b of the connection module 3 and/or the half shells 4a and 4b of the base module 4 preferably form a single piece.

Preferably, the connection module 3 or the base module 4 comprises a prismatic block.

Preferably each of such connection module 3 and base module 4 comprises a prismatic block, which in turn includes the two respective half shells 3a and 3b of the connection module 3 and, respectively, 4a and 4b of the base module 4.

Such friction locking means may be clamp locking means.

A possible manufacturing method of the support frame 1 comprises the following steps:
preparing the casing 2, said connection module 3 and said base module 4.

The casing 2 is realized and/or arranged in such a way that said casing 2 is of suitable length to contain said at least one rod of the steering column, depending on the specific length of said rod.

Such method comprises the step of attaching such connection modules 3 and base modules 4 respectively to a second sector of said casing 2 by means of said friction locking means.

Preferably, the preparation of said casing 2 is obtained starting from an extruded material, by cutting a piece of the same extruded material which has an appropriate length.

Advantageously, this method is carried out to obtain a plurality of casings 2 of different respective lengths and adapted to the respective steering column rods of different lengths.

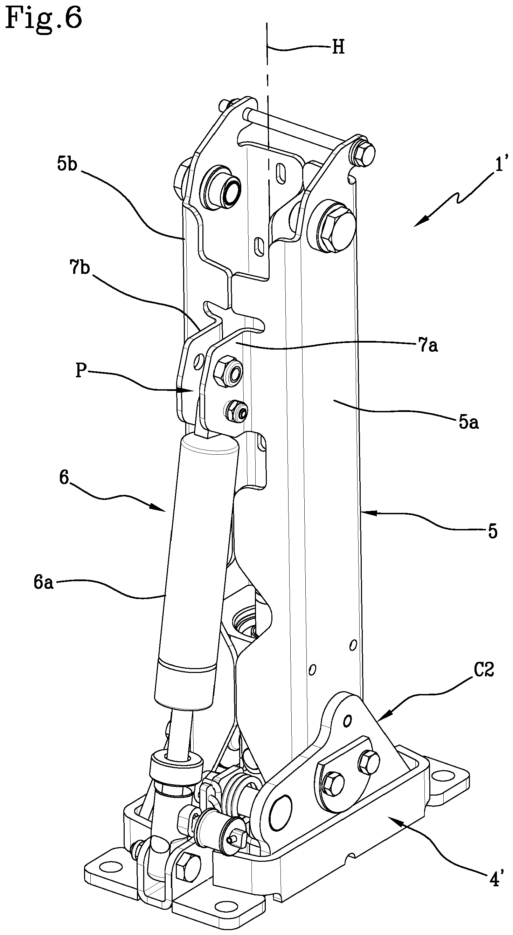

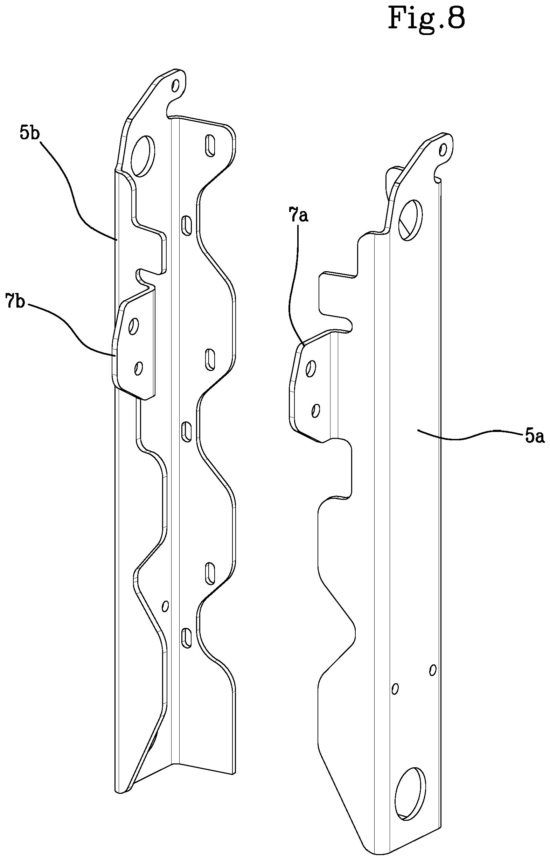

Figures 6-8 show a casing 5 for at least one rod of a steering column for a tractor. This casing 5 is adapted to be part of a supporting frame 1' for such rod.

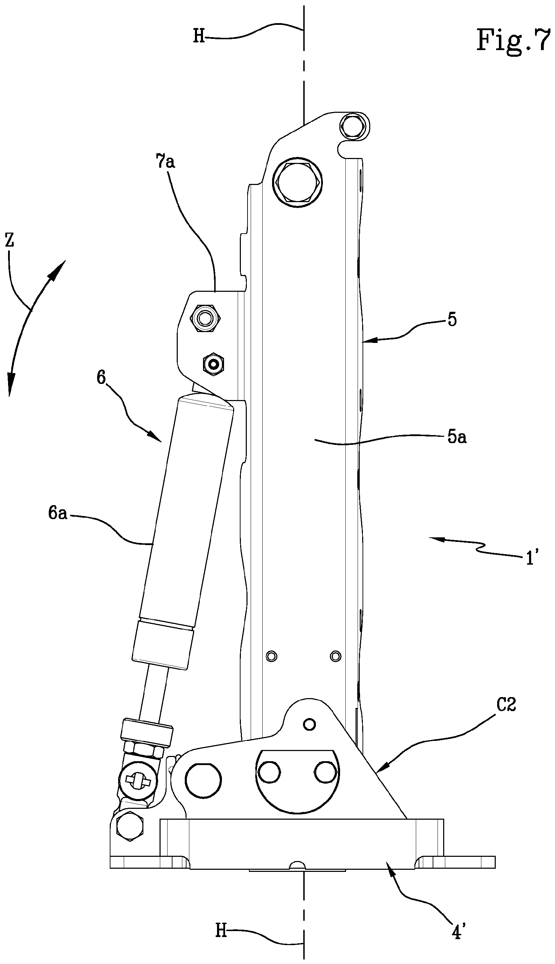

The example of the support frame 1' of Figures 6 and 7 comprises such a casing 5 and a base module 4', and a hinge constraining system C2 between the base module 4' and the casing 5.

Such a support frame 1' includes a locking system 6 configured to lock and unlock the rotation of said casing 5 around said hinge constraining system C2 and with respect to said base module 4'.

When such a locking system 6 is in a locked condition, the rotation of the casing 5 around said hinge constraining system C2 and with respect to the base module 4' and according to the double arrow Z of Figure 7 is prevented.

When such a locking system 6 is in an unlocked condition, the rotation of the casing 5 around said hinge constraining system C2 and with respect to the base module 4' and according to the double arrow Z of Figure 7 is allowed.

Such locking system 6 advantageously comprises a spring 6a, for example a gas spring.

Such casing 5 preferably comprises at least two half shells 5a and 5b attachable to each other so as to define such box-like body.

Such box-like body extends along its extension axis H.

These half-shells 5a and 5b are preferably mutually distinct, but may alternatively form a single piece.

This casing 5 is configured to be constrained, in at least one first constraint point P, to the locking system 6.

Such casing 5 preferably comprises, on its boundary surface, at least a connection flange 7a projecting from such boundary surface and configured to define said at least a first constraint point P.

This boundary surface is to be considered as a surface that delimits the internal volume of the box-shaped body and which is located around the extension axis H of the same box-like body.

The casing 5 preferably comprises a connection flange 7a associated with the first half shell 5a and a second connection flange 7b associated to the second half shell 5b. Such connection flanges 7a and 7b are advantageously facing so as to define the constraint point P between them.

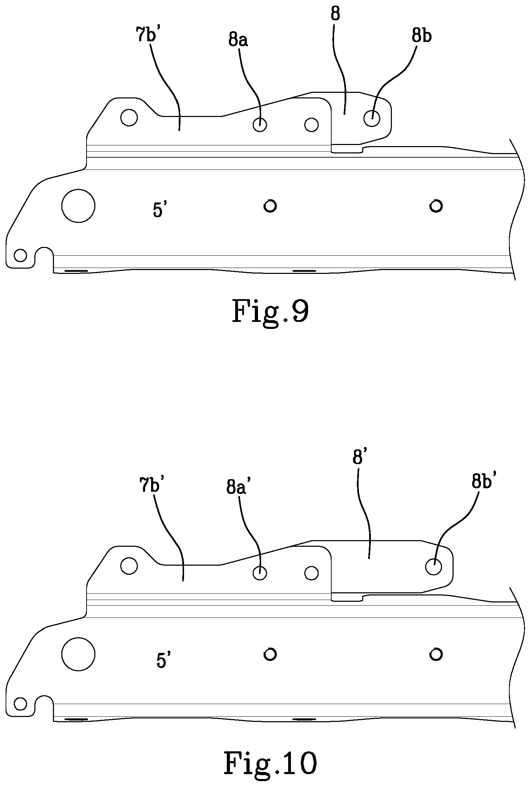

Figures 9 and 10 show a portion of a second example of casing in accordance with the present invention, indicated with 5'. In this case, the connection flange 7b' is configured to constrain said locking system, not shown in Figures 9 and 10, to the casing 5', through the interposition of a connection element, which may comprise an intermediate plate 8, between the connection flange 7 itself and the locking system.

Such intermediate plate 8 is configured to be attached on one side to the connection flange 7b' and to be hinged on the other side to the locking system. To this end, the intermediate plate 8 preferably comprises at least a first hole 8a for fixing the intermediate plate 8 to the connecting flange 7b', and at least one second hole 8b to define the hinge between the intermediate plate 8 and the locking system.

Even in the example of casing 5' to which Figures 9 and 10 refer, a second connection flange may also be present, facing the one which is shown, though not visible in such figures.

The connection flange 7b' is preferably configured to be constrained to the locking system alternately with the interposition of different intermediate plates, for example that indicated by 8 in Figure 9 and that indicated by 8' in Figure 10. Once attached to the connection flange 7' itself, the intermediate plates 8 and 8' have respective different dimensions along the extension axis of the box-like body defined by the casing 5', so as to vary, with the variation of such size, the inclination of the casing 5', and therefore also the rod of the steering column, when contained in the casing 5' itself, with respect to the structure of the tractor, considering at least constant the characteristics of the locking system itself.

These different intermediate plates can also be more than two, each with a respective dimension along the extension axis of the casing 5'. The type of connection flange 7' shown in Figures 9 and 10 may also be present in the casing 5 of Figures 6-8.

Figure 10 also indicates the first hole 8a' and the second hole 8b' of the intermediate plate 8'.

Even the casing 5' may comprise two half shells, as the casing 5.

The half shells are preferably made by laser or trimming, which allows to make it easier to obtain compliant pieces.

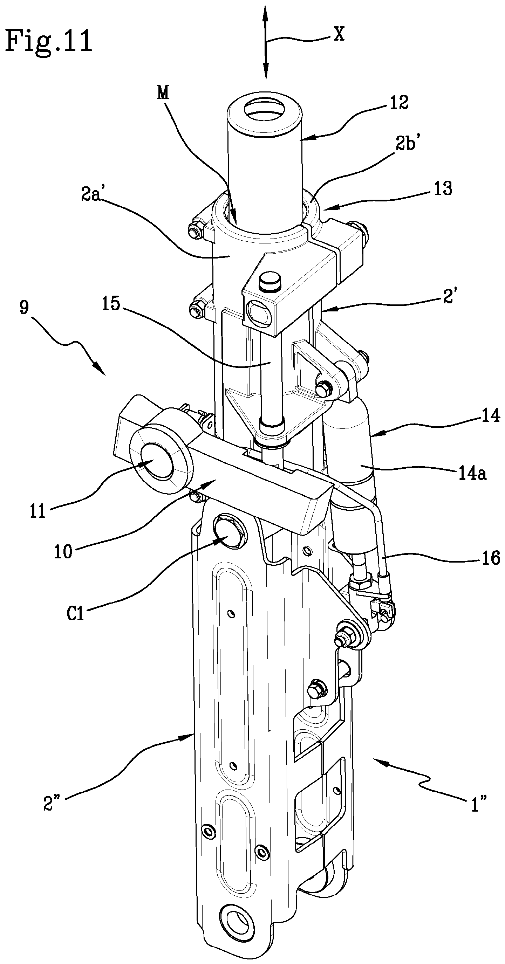

Figures 11-13 show an example of a control system 9 according to the present invention. The control system 9 comprises a control lever 10, which includes a button 11.

The control system 9 is suitable to be associated to a support framework 1" for a steering column for a tractor,

The example of framework 1" according to Figures 11-13 may comprise a casing 2' for a rod of such a column and an additional casing 2" for a further rod of such column, and a hinge constraining system C1 interposed between the same casing 2' and additional casing 2".

Such framework 1" may comprise a drive shaft 12 connected to the steering column and a sleeve constraining system M between said drive shaft 12 and said casing 2'.

The framework 1" comprises a first locking system 13 configured to lock and unlock the translational motion of the drive shaft 12 along the sleeve constraining system M and relative to the casing 2'.

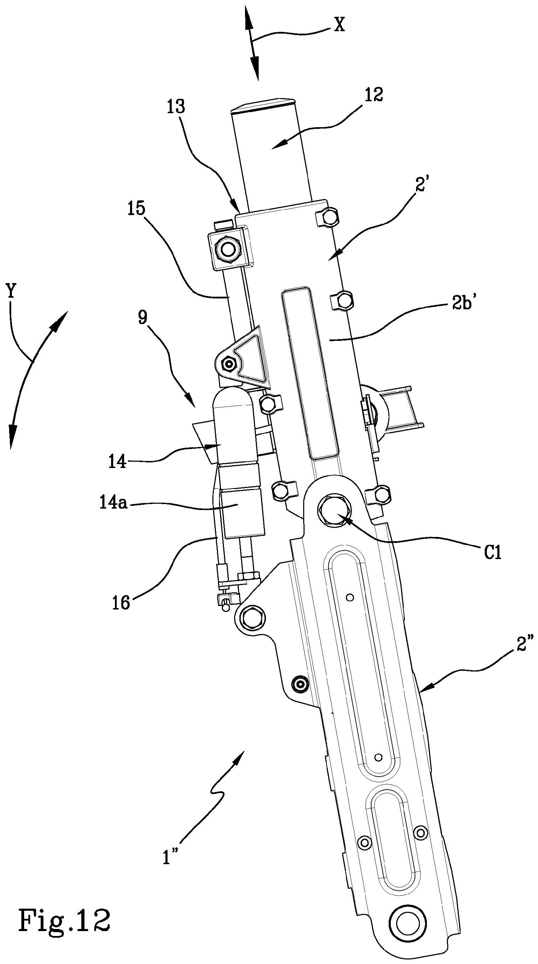

When such first locking system 13 is in a locked condition, the translational motion of the drive shaft 12 relative to the casing 2', along the sleeve constraining system M and according to the double arrow X of Figure 11 or 12 is prevented.

When such first locking system 13 is in an unlocked condition, the translational motion of the drive shaft 12 relative to the casing 2', along the sleeve constraining system M and according to the double arrow X of Figure 11 or 12 is allowed.

The framework 1' comprises a further second locking system 14 configured to lock and unlock the rotation of said casing 2' around the hinge constraining system C1 and relative to the additional casing 2".

When such further second locking system 14 is in a locked condition, the rotation of the casing 2' with respect to the further casing 2", around the hinge constraining system C1 and according to the double arrow Y of Figure 12 is prevented.

When such further second locking system 14 is in an unlocked condition, the rotation of the first casing 2' with respect to the further casing 2", around the hinge constraining system C1 and according to the double arrow Y of Figure 12 is allowed.

Such control system 9 is configured to act either on a locking system 13 and to act on the further second locking system 14. The user can also act simultaneously on these locking systems 13 and 14.

In this way, said control system 9 allows the user to make a double adjustment of the position of the drive shaft 12 relative to the casing 2' and the inclination of said rod of the steering column with respect to such further rod of the steering column, so that said control system may be considered a dual integrated command.

Such control system 9 is configured to impart to such locking system 13 such locking condition when the lever 10 is in a first angular position, and to impart to such first locking system 13 said unlocking condition when such lever 10 is in a second angular position.

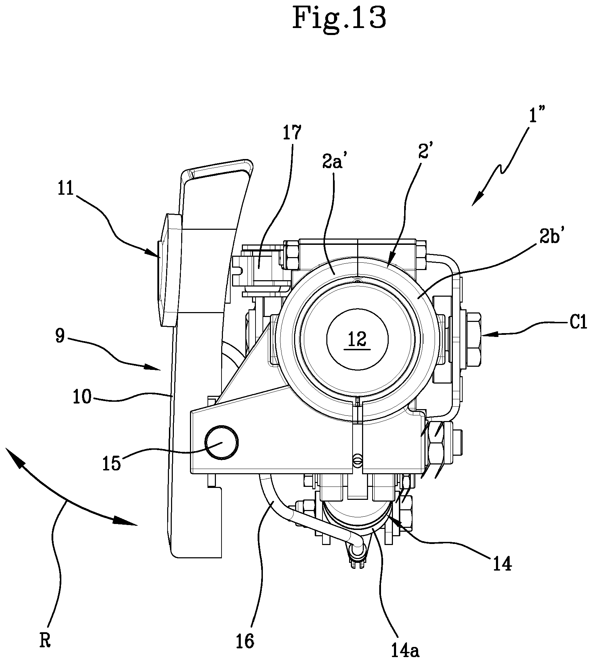

Such lever 10 is able to switch from said first angular position to said second angular position, and vice versa, by a rotation in one direction and respectively in the opposite direction, according to the double arrow R of Figure 13.

Such control system 9 is configured to impart to such further locking system 14 a locking condition when the button 11 is actuated, and to impart to that further second locking system 14 an unlocking condition when such button 11 is released, or vice versa.

The first locking system 13 comprises, in the example shown in the figures, the two half shells 2a' and 2b' which are part of the casing 2' and are suitable to tighten around the drive shaft 12.

The further second locking system 14, in the example shown in the figures, comprises a spring 14a, for example a gas spring.

To act on the first locking system 13, in the example shown in the figures, the control system 12 comprises a pin 15, operatively interposed between the control lever 10 and half shells 2a' and 2b'. The pin 15 is connected to the lever 10 so as to be dragged by the rotation of the lever 10 according to the arrow R of Figure 13 and cause the locking or unlocking of the grip of the half shells 2a and 2b' on the drive shaft 12.

To act on the further second locking system 14, in the example shown in the figures, the control system 12 includes a cable 16, preferably of the Bowden type, interposed between an intermediate flange 17, on which the button 11 and the spring 14a can act.

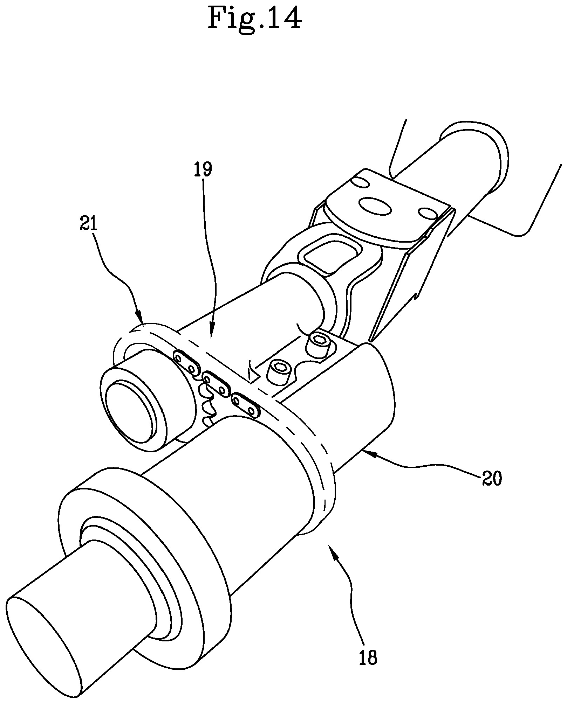

Figure 14 shows a possible embodiment of a transmission system 18 suitable for transmitting the rotation of a rotating part of a fixed-hub or fixed-crown wheel to a control shaft 19, in turn suitable to be connected to a steering column for a tractor, according to the present invention. The transmission system 18 comprises a drive shaft 20 adapted to be rigidly coupled to the rotating part, and a transmission element 21, windable and adapted to be interposed between said transmission shaft 20 and drive shaft 19.

Such windable transmission element 21 in Figure 14 is a chain, but it could be of another type, such as for example a belt.

By means of this transmission system, the transmission ratio between the transmission shaft 20 and the drive shaft 19 may also be one to one. Such one-to-one transmission ratio is not possible with the intermediate transmission system initially described between the rotating part of the steering wheel and the drive shaft.

The described invention allows to realize a support framework for a steering column of a tractor which allows to reduce the manufacturing time of the framework itself, and to increase the versatility of the components of the frame itself, to significantly reduce warehouse costs.

In addition, the described invention allows to develop a control system associated to a support frame for a steering column for a tractor which allows to move mutually different parts of the same column by means of system with reduced footprint and convenient to use.

The described invention also allows to associate such a support frame to a transmission system, between the rotating part of the steering wheel and the steering column connected to the drive shaft, sufficiently compact so as to leave plenty of space for the positioning of the connections necessary to the control the functions of the tractor by the driver, and able to optimize the transmission ratio.

## Claims

1. A steering column assembly for at least one rod of a steering column for a tractor, comprising a support frame (1, 1', 1'') comprising:
- a casing (2, 2', 2", 5, 5') for said at least one rod;
- a base module (4, 4') configured to be attached around a second sector of said casing (2, 2', 2", 5, 5') by means of respective friction locking means; and
- a connection module (3) configured to be attached around a first sector of said casing (2, 2', 2", 5, 5') by means of respective friction locking means,
**characterized in that** said steering column assembly further comprises a control system (9) associated with said support frame (1, 1', 1''), said control system (9) being configured to act on:
- a first locking system (13) configured to lock and unlock the translational motion of a drive shaft (12) connectable to said steering column, said translational motion being along a sleeve constraining system (M) and with respect to said casing (2, 2', 2", 5, 5'); and
- a second locking system (14) configured to lock and unlock the rotation of the casing (2, 2', 2", 5, 5') around a hinge constraining system (C1) and with respect to said casing (2, 2', 2", 5, 5') for a further rod of the steering column,
said control system (9) allowing the user to make a double adjustment of the position of the drive shaft (12) relative to the casing (2, 2', 2", 5, 5') and the inclination of such rod of the steering column with respect to such further rod of the steering column, also at the same time, said control system (9) comprising a lever (10) which includes a button (11).

2. A steering column assembly according to claim 1, wherein said control system (9) is configured to impart to the first locking system (13) said locked condition when the lever (10) is in a first angular position, and to impart to the first locking system (13) an unlocked condition when the lever (10) is in a second angular position, the lever (10) being able to switch from the first angular position to the second angular position and vice versa by rotating in one direction and respectively in the opposite direction.

3. A steering column assembly according to claims 1 or 2, wherein the control system (9) is configured to impart to the second locking system (14) a locked condition when the button (11) is actuated, and to impart to the second locking system (14) an unlocked condition when that button (11) is released, or vice versa.

4. A steering column assembly according to any one of the preceding claims, wherein said locking means comprise at least two half shells (3a, 3b; 4a, 4b) of the respective module (3; 4, 4') suitable to define therebetween an opening (3c; 4c) for the insertion of the respective sector of said casing (2, 2', 2", 5, 5') in the respective module (3; 4, 4'), each of said modules (3; 4, 4') being suitable to be tight around the respective sector of said casing (2, 2', 2", 5, 5'), when attached to the casing (2, 2', 2", 5, 5') itself.

5. A steering column assembly according to claim 3, wherein at least one of said modules (3, 4, 4') comprises a prismatic block, in turn comprising the respective half shells (3a, 3b; 4a, 4b).

6. A steering column assembly according to any one of the preceding claims, wherein the casing (2, 2', 2", 5, 5') defines a box-like body that extends along an extension axis (H).

7. A steering column assembly according to claim 6, wherein the casing (2, 2', 2", 5, 5') according to claim 5 comprises at least two half shells (5a, 5b), attachable to each other so as to define said box-like body.

8. A steering column assembly according to claims 6 or 7, wherein the casing (2, 2', 2", 5, 5') is suitable to be constrained, at least one constraint point (P), to a locking system (6) configured to lock and unlock the rotation of said casing (2, 2', 2", 5, 5') around a hinge constraining system (C2) and with respect to a base module (4'), said casing (2, 2', 2", 5, 5') comprising, on its boundary surface, at least one connecting flange (7a; 7b) projecting from that boundary surface and configured to define said constraint point (P).

9. A steering column assembly according to claim 8, wherein said connection flange (7b') is configured to constrain said locking system (6) to the casing (2, 2', 2", 5, 5') through the interposition of an intermediate plate (8) between the connection flange (7b') itself and the locking system (6).

10. Frame according to claim 9, wherein the intermediate plate (8) is configured to be attached on one side to the connection flange (7b') and to be hinged on the other side to the locking system (6).

11. A steering column assembly according to claims 9 or 10, wherein said connection flange (7b') is configured to be constrained to the locking system (6) alternately by means of the interposition of intermediate plates (8, 8'), which, once attached to the connection flange (7b') itself, have respective different dimensions along the extension axis (H) of the box-like body defined by the casing (2, 2', 2", 5, 5'), so as to vary, with the variation of such size, the inclination of the casing (2, 2', 2", 5, 5'), and therefore also the rod of the steering column, when contained in the casing (2, 2', 2", 5, 5') itself, with respect to the structure of the tractor.

12. A steering column assembly according to any one of the preceding claims, comprising a transmission system (18) suitable for transmitting the rotation of a rotary part of a fixed-hub or fixed-crown wheel to a drive shaft (19) connectable to a steering column for a tractor, said transmission system (18) comprising:
- a transmission shaft (20) suitable to be rigidly integral to said rotating part of a steering wheel; and
- a windable transmission element (21) suitable to be interposed between said transmission shaft (20) and drive shaft (19).

13. A steering column assembly according to claim 12, wherein said transmission element (21) comprises a belt or a chain.

14. Method for producing a steering column assembly according to any one of the preceding claims for at least one rod of a steering column for a tractor comprising a support frame (1, 1', 1") and a control system (9), said support frame (1, 1', 1'') comprising a casing (2, 2', 2", 5, 5') for said at least one rod, a base module (4, 4') and a connection module (3), said method comprising the following steps:
- preparing said casing (2, 2', 2", 5, 5'), said connection module (3) and said base module (4, 4'), said casing (2, 2', 2", 5, 5') being arranged so that it has an appropriate length to contain said at least one rod;
- preparing said control system (9);
- attaching said modules (3, 4, 4') respectively to a first sector and a second sector of said casing (2, 2', 2", 5, 5') by means of friction locking means; and
- associating said control system (9) with said support frame (1, 1', 1").

## Patentansprüche

1. Lenksäulenanordnung für mindestens eine Stange einer Lenksäule für einen Traktor, umfassend ein Unterstützgestell (1, 1', 1"), umfassend:
- ein Gehäuse (2, 2', 2", 5, 5') für die mindestens eine Stange;
- ein Basismodul (4, 4'), das ausgelegt ist, um rund um einen zweiten Sektor des Gehäuses (2, 2', 2", 5, 5') mittels jeweiliger Reibungsverriegelungsmittel angebracht zu werden, und
- ein Verbindungsmodul (3), das ausgelegt ist, um rund um einen ersten Sektor des Gehäuses (2, 2', 2", 5, 5') mittels jeweiliger Reibungsverriegelungsmittel angebracht zu werden,
**dadurch gekennzeichnet, dass** die Lenksäulenanordnung zudem ein Steuersystem (9) umfasst, das mit dem Unterstützgestell (1, 1', 1") verbunden ist, wobei das Steuersystem (9) ausgelegt ist, um zu wirken auf:
- ein erstes Verriegelungssystem (13), das ausgelegt ist, um die Verschiebebewegung einer Antriebswelle (12), die an die Lenksäule angeschlossen werden kann, zu verriegeln und zu entriegeln, wobei die Verschiebebewegung entlang eines Hülsenbefestigungssystems (M) und zum Gehäuse (2, 2', 2", 5, 5') erfolgt, und
- ein zweites Verriegelungssystem (14), das ausgelegt ist, um die Drehung des Gehäuses (2, 2', 2", 5, 5') rund um ein Scharnierbefestigungssystem (C1) und zum Gehäuse (2, 2', 2", 5, 5') für eine weitere Stange der Lenksäule zu verriegeln und zu entriegeln,
wobei das Steuersystem (9) dem Nutzer erlaubt, eine doppelte Einstellung der Position der Antriebswelle (12) zum Gehäuse (2, 2', 2", 5, 5') durchzuführen und die Stange der Lenksäule zur weiteren Stange der Lenksäule auch gleichzeitig zu neigen, wobei das Steuersystem (9) einen Hebel (10) umfasst, der einen Knopf (11) einschließt.

2. Lenksäulenanordnung nach Anspruch 1, wobei das Steuersystem (9) ausgelegt ist, um dem ersten Verriegelungssystem (13) den verriegelten Zustand zu verleihen, wenn sich der Hebel (10) in einer ersten Winkelposition befindet, und um dem ersten Verriegelungssystem (13) einen entriegelten Zustand zu verleihen, wenn sich der Hebel (10) in einer zweiten Winkelposition befindet, wobei der Hebel (10) in der Lage ist, aus der ersten Winkelposition in die zweite Winkelposition und umgekehrt umzuschalten, indem er in eine Richtung und jeweils in die andere Richtung gedreht wird.

3. Lenksäulenanordnung nach Anspruch 1 oder 2, wobei das Steuersystem (9) ausgelegt ist, um dem zweiten Verriegelungssystem (14) einen verriegelten Zustand zu verleihen, wenn der Knopf (11) betätigt wird, und um dem zweiten Verriegelungssystem (14) einen entriegelten Zustand zu verleihen, wenn der Knopf (11) losgelassen wird oder umgekehrt.

4. Lenksäulenanordnung nach einem der vorhergehenden Ansprüche, wobei die Verriegelungsmittel mindestens zwei Halbschalen (3a, 3b; 4a, 4b) des jeweiligen Moduls (3; 4, 4') umfassen, geeignet, um dazwischen eine Öffnung (3c; 4c) für das Einführen des jeweiligen Sektors des Gehäuses (2, 2', 2", 5, 5') im jeweiligen Modul (3; 4, 4') zu definieren, wobei ein jedes der Module (3; 4, 4') geeignet ist, um rund um den jeweiligen Sektor des Gehäuses (2, 2', 2", 5, 5') angezogen zu werden, wenn am Gehäuse (2, 2', 2", 5, 5') angebracht.

5. Lenksäulenanordnung nach Anspruch 3, wobei mindestens eins der Module (3, 4, 4') einen prismatischen Block umfasst, der wiederum die jeweiligen Halbschalen (3a, 3b; 4a, 4b) umfasst.

6. Lenksäulenanordnung nach einem der vorhergehenden Ansprüche, wobei das Gehäuse (2, 2', 2", 5, 5') einen boxähnlichen Körper definiert, der sich entlang einer Ausdehnungsachse (H) erstreckt.

7. Lenksäulenanordnung nach Anspruch 6, wobei das Gehäuse (2, 2', 2", 5, 5') nach Anspruch 5 mindestens zwei Halbschalen (5a, 5b) umfasst, die aneinander angebracht werden können, sodass sie den boxähnlichen Körper definieren.

8. Lenksäulenanordnung nach Anspruch 6 oder 7, wobei das Gehäuse (2, 2', 2", 5, 5') geeignet ist, um mindestens an einem Befestigungspunkt (P) an einem Verriegelungssystem (6) befestigt zu werden, ausgelegt, um die Drehung des Gehäuses (2, 2', 2", 5, 5') rund um ein Scharnierbefestigungssystem (C2) und zu einem Basismodul (4') zu verriegeln und zu entriegeln, wobei das Gehäuse (2, 2', 2", 5, 5') an seiner Grenzoberfläche mindestens einen Verbindungsflansch (7a; 7b) umfasst, der aus der Grenzoberfläche hervorsteht und ausgelegt ist, um den Befestigungspunkt (P) zu definieren.

9. Lenksäulenanordnung nach Anspruch 8, wobei der Verbindungsflansch (7b') ausgelegt ist, um das Verriegelungssystem (6) am Gehäuse (2, 2', 2", 5, 5') durch das Einsetzen einer Zwischenplatte (8) zwischen dem Verbindungsflansch (7b') und dem Verriegelungssystem (6) zu befestigen.

10. Gestell nach Anspruch 9, wobei die Zwischenplatte (8) ausgelegt ist, um an einer Seite am Verbindungsflansch (7b') angebracht und an der anderen Seite mittels eines Scharniers am Verriegelungssystem (6) befestigt zu werden.

11. Lenksäulenanordnung nach Anspruch 9 oder 10, wobei der Verbindungsflansch (7b') ausgelegt ist, um am Verriegelungssystem (6) alternativ mittels des Einsetzen von Zwischenplatten (8, 8') befestigt zu werden, die nach dem Anbringen am Verbindungsflansch (7b') jeweilige unterschiedliche Abmessungen entlang der Ausdehnungsachse (H) des boxenähnlichen Körpers aufweisen, der durch das Gehäuse (2, 2', 2", 5, 5') definiert ist, sodass mit der Änderung der Größe die Neigung des Gehäuses (2, 2', 2", 5, 5') zur Struktur des Traktors variiert wird und somit auch die Stange der Lenksäule, wenn diese im Gehäuse (2, 2', 2", 5, 5') enthalten ist.

12. Lenksäulenanordnung nach einem der vorhergehenden Ansprüche, umfassend ein Antriebssystem (18), das geeignet ist, um die Drehung eines rotatorischen Teils eines Festnaben- oder Festkranzrads auf eine Antriebswelle (19) zu übertragen, die mit einer Lenksäule für einen Traktor verbunden werden kann, wobei das Antriebssystem (18) umfasst:
- eine Übertragungswelle (20), die geeignet ist, um steif fest mit dem rotatorischen Teil eines Lenkrads verbunden zu sein, und
- ein Wickelübertragungselement (21), das geeignet ist, um zwischen der Übertragungswelle (20) und der Antriebswelle (19) eingesetzt zu werden.

13. Lenksäulenanordnung nach Anspruch 12, wobei das Übertragungselement (21) ein Band oder eine Kette umfasst.

14. Verfahren zur Herstellung einer Lenksäulenanordnung nach einem der vorhergehenden Ansprüche für mindestens eine Stange einer Lenksäule für einen Traktor, umfassend ein Unterstützgestell (1, 1', 1") und ein Steuersystem (9), wobei das Unterstützgestell (1, 1', 1") ein Gehäuse (2, 2', 2", 5, 5') für die mindestens eine Stange, ein Basismodul (4, 4') und ein Verbindungsmodul (3) umfasst, wobei das Verfahren die folgenden Schritte umfasst:
- Vorbereiten des Gehäuses (2, 2', 2", 5, 5'), des Verbindungsmoduls (3) und des Basismoduls (4, 4') sowie das Gehäuse (2, 2', 2", 5, 5') so angeordnet ist, dass es eine geeignete Länge aufweist, um die mindestens eine Stange zu enthalten;
- Vorbereiten des Steuersystems (9);
- Anbringen der Module (3, 4, 4') jeweils an einem ersten Sektor und einem zweiten Sektor des Gehäuses (2, 2', 2", 5, 5') mittels Reibungsverriegelungsmitteln, und
- Assoziieren des Steuersystems (9) mit dem Unterstützgestell (1, 1', 1").

## Revendications

1. Ensemble de colonne de direction pour au moins une bielle d'une colonne de direction pour un tracteur, comprenant un cadre de support (1, 1', 1") comprenant :
- une enveloppe (2, 2', 2", 5, 5') pour ladite au moins une bielle ;
- un module de base (4, 4') configuré pour être attaché autour d'un second secteur de ladite enveloppe (2, 2', 2", 5, 5') par l'intermédiaire de moyens de blocage à friction respectifs ; et
- un module de raccordement (3) configuré pour être attaché autour d'un premier secteur de ladite enveloppe (2, 2', 2", 5, 5') par l'intermédiaire de moyens de blocage à friction respectifs,
**caractérisé en ce que** ledit ensemble de colonne de direction comprend de plus un système de commande (9) associé au dit châssis de support (1, 1', 1"), ledit système de commande (9) étant configuré pour agir sur :
- un premier système de blocage (13) configuré pour bloquer et débloquer le mouvement de translation d'un arbre d'entraînement (12) étant relié à ladite colonne de direction, ledit mouvement de translation étant le long d'un système de retenue à manchon (M) et par rapport à ladite enveloppe (2, 2', 2", 5, 5') ; et
- un second système de blocage (14) configuré pour bloquer et débloquer la rotation de l'enveloppe (2, 2', 2", 5, 5') autour d'un système de retenue à charnière (C1) et par rapport à ladite enveloppe (2, 2', 2", 5, 5') pour une bielle supplémentaire de la colonne de direction,
ledit système de commande (9) permettant à l'utilisateur de réaliser un double réglage de la position de l'arbre d'entraînement (12) par rapport à l'enveloppe (2, 2', 2", 5, 5') et de l'inclinaison de ladite bielle de la colonne de direction par rapport à ladite bielle supplémentaire de la colonne de direction, ledit système de commande (9) comprenant aussi en même temps un levier (10) incluant un bouton (11) .

2. Ensemble de colonne de direction selon la revendication 1, dans lequel ledit système de commande (9) est configuré pour conférer au premier système de blocage (13) ladite condition de blocage lorsque le levier (10) se trouve dans une première position angulaire, et pour conférer au premier système de blocage (13) une condition de déblocage lorsque le levier (10) se trouve dans une seconde position angulaire, le levier (10) pouvant passer de la première position angulaire à la seconde position angulaire et vice versa en tournant dans une direction et respectivement dans la direction opposée.

3. Ensemble de colonne de direction selon les revendications 1 ou 2, dans lequel le système de commande (9) est configuré pour conférer au second système de blocage (14) une condition de blocage lorsque le bouton (11) est actionné, et pour conférer au second système de blocage (14) une condition de déblocage lorsque ce bouton (11) est relâché ou vice versa.

4. Ensemble de colonne de direction selon l'une quelconque des revendications précédentes, dans lequel lesdits moyens de blocage comprennent au moins deux demi coques (3a, 3b ; 4a, 4b) du module (3 ; 4, 4') respectif pouvant définir entre elles une ouverture (3c ; 4c) pour l'introduction du secteur respectif de ladite enveloppe (2, 2', 2", 5, 5') dans le module (3 ; 4, 4') respectif, chacun desdits modules (3 ; 4, 4') pouvant être serré autour du secteur respectif de ladite enveloppe (2, 2', 2", 5, 5') lorsqu'il est attaché à l'enveloppe (2, 2', 2", 5, 5') elle-même.

5. Ensemble de colonne de direction selon la revendication 3, dans lequel au moins un desdits modules (3, 4, 4') comprend un bloc prismatique comprenant à son tour les demi coques (3a, 3b ; 4a, 4b) respectives.

6. Ensemble de colonne de direction selon l'une quelconque des revendications précédentes, dans lequel l'enveloppe (2, 2', 2", 5, 5') définit un corps en forme de boîtier se prolongeant le long d'un axe d'extension (H).

7. Ensemble de colonne de direction selon la revendication 6, dans lequel l'enveloppe (2, 2', 2", 5, 5') selon la revendication 5 comprend au moins deux demi coques (5a, 5b) pouvant se fixer l'une à l'autre de sorte à définir ledit corps en forme de boîtier.

8. Ensemble de colonne de direction selon les revendications 6 ou 7, dans lequel l'enveloppe (2, 2', 2", 5, 5') peut être contrainte, au moins en un point de contrainte (P), à un système de blocage (6) configuré pour bloquer et débloquer la rotation de ladite enveloppe (2, 2', 2", 5, 5') autour d'un système de contrainte à charnière (C2) et par rapport à un module de base (4'), ladite enveloppe (2, 2', 2", 5, 5') comprenant, sur sa surface de délimitation, au moins une bride de raccordement (7a ; 7b) dépassant de cette surface de délimitation et configurée pour définir ledit point de contrainte (P).

9. Ensemble de colonne de direction selon la revendication 8, dans lequel ladite bride de raccordement (7b') est configurée pour contraindre ledit système de blocage (6) à ladite enveloppe (2, 2', 2", 5, 5') à travers l'interposition d'une plaque intermédiaire (8) entre la bride de raccordement (7b') elle-même et le système de blocage (6).

10. Châssis selon la revendication 9, dans lequel la plaque intermédiaire (8) est configurée pour être fixée sur un côté de la bride de raccordement (7b') et pour être montée articulée sur l'autre côté du système de blocage (6).

11. Ensemble de colonne de direction selon les revendications 9 ou 10, dans lequel ladite bride de raccordement (7b') est configurée pour être contrainte au système de blocage (6) alternativement au moyen de l'interposition des plaques intermédiaires (8, 8') qui, lorsqu'elles sont fixées à la bride de raccordement (7b') elle-même, ont des dimensions respectives différentes le long de l'axe d'extension (H) du corps en forme de boîtier défini par l'enveloppe (2, 2', 2", 5, 5'), de manière à varier, avec la variation de telle dimension, l'inclinaison de l'enveloppe (2, 2', 2", 5, 5'), et par conséquent aussi la bielle de la colonne de direction, lorsqu'elle est contenue dans l'enveloppe (2, 2', 2", 5, 5') elle-même par rapport à la structure du tracteur.

12. Ensemble de colonne de direction selon l'une quelconque des revendications précédentes, comprenant un système de transmission (18) pouvant transmettre la rotation d'une partie rotative d'un moyeu fixe ou d'une roue en couronne fixe à un arbre d'entraînement (19) pouvant être relié à une colonne de direction d'un tracteur, ledit système de transmission (18) comprenant :
- un arbre de transmission (20) pouvant être solidaire rigidement de ladite partie rotative d'un volant de direction ; et
- un élément de transmission enroulable (21) pouvant être interposé entre ledit arbre de transmission (20) et l'arbre d'entraînement (19).

13. Ensemble de la colonne de direction selon la revendication 12, dans lequel l'élément de transmission (21) comprend une courroie ou une chaîne.

14. Procédé de fabrication d'un ensemble de colonne de direction selon l'une quelconque des revendications précédentes pour au moins une bielle d'une colonne de direction pour un tracteur comprenant un châssis de support (1, 1', 1") et un système de commande (9), ledit châssis de support (1, 1', 1") comprenant une enveloppe (2, 2', 2", 5, 5') pour ladite au moins une bielle, un module de base (4, 4') et un module de raccordement (3), ledit procédé comprenant les étapes suivantes :
- préparer ladite enveloppe (2, 2', 2", 5, 5'), ledit module de raccordement (3) et ledit module de base (4, 4'), ladite enveloppe (2, 2', 2", 5, 5') étant disposée de manière à ce qu'elle possède une longueur appropriée pour contenir ladite au moins une bielle ;
- préparer ledit système de commande (9) ;
- fixer lesdits modules (3, 4, 4') respectivement à un premier secteur et à un second secteur de ladite enveloppe (2, 2', 2", 5, 5') par l'intermédiaire de moyens de blocage à friction ; et
- associer ledit système de commande (9) au dit châssis de support (1, 1', 1").
